# EUROPEAN PATENT APPLICATION

(11) **EP 2 387 228 A2**
(43) Date of publication of application: **16.11.2011**
(21) Application number: 11164391.2
(22) Date of filing: 02.05.2011
(51) Int. Cl.: H04N 5/232, H04N 5/262, G08B 13/196, H04N 7/18

(54) **Control device, camera, method and computer program storage device**

(30) Priority: 10.05.2010 JP 2010108563
(71) Applicant: Sony Corporation, Tokyo 108-0075 (JP)
(72) Inventor: Kazunori, Sakaki, Tokyo (JP)
(74) Representative: Beder, Jens

(57) **Abstract**

A camera, controller, method and non-transitory computer readable storage device cooperate to control different portions of an area covered by a camera. Selective control is granted to different remote devices to establish respective portions of the area, so the respective portions of the image are sent to the remote devices making the request. Moreover, the camera has a digital pan, digital tilt, and digital zoom capability, which allows multiple portions of the image to be set by remote devices. When a limited number of remote devices are allowed to simultaneously control the portions of the area covered by the camera, then control is selectively transferred from one device to an awaiting device.

## Description

### BACKGROUND

### Technical Field

The present disclosure relates to a control device, camera, method and computer program storage device.

### Description of the Related Art

A camera control system in which, when a plurality of users can operate a camera, control over the camera is assigned to a user who wants to operate for a fixed period has been known to prevent a collision of operations from the plurality of users. This camera control system is described, for example, in Japanese Patent Application Laid-Open No. 2004-194217. Japanese Patent Application Laid-Open No. 2004-194217 described that control is exercised so that an operation unit is displayed when the camera control is held and no operation unit is displayed when the camera control is not held. Moreover, as described in Japanese Patent Application Laid-Open No. 2004-194217, a camera control system in which a list of images from a plurality of cameras is displayed and the display state is changed depending on whether a camera can be operated or not is known. Japanese Patent Application Laid-Open No. 9-214811 describes that when a camera is not operable, control is exercised so that the operation unit corresponding thereto is displayed in gray. Japanese Patent No. 3548352 describes a system that assigns control in a remote camera control system.

### SUMMARY

However, according to the above-described technologies, the imaging direction of a camera is fixed in all the above systems and no system assumes operations such as panning, tilting, and zooming by digitally cutting out a desired region from a whole image. Thus, there is an issue that it is necessary to mechanically exercise control such as panning, tilting, and zooming on the side of a camera terminal device, making the system more complicated.

In light of the foregoing, it is desirable to provide a novel and improved control device capable of properly giving control to a client device in a system in which operations such as panning, tilting, and zooming are digitally performed, a controller, camera, method and computer program storage device.

According to one camera control unit embodiment, an image processing unit controllably captures a cut out portion of the image. An interface controller is included and is configured to receive a control request and selectively grant control in response, and receive a designation request to set the cut out portion of the image.

The control may be of a digital (or physical) pan, tilt and zoom camera control.

Optionally, the cut out portion is a first cut out portion, and the interface controller is configured to selectively grant control over the first cut out portion to a remote device, and selectively grant control over a second cut out portion to a second remote device.

Alternatively, the first cut out portion is a different part of the image than the second cut out portion.

Also, the control request may include a specification of the cut out portion of the image.

The camera may also be a video camera.

The image processor may optionally apply at least one of common codec, resolution, and frame rate settings for the first cut out portion and the second cut out portion.

Likewise, the image processor may apply a different one of at least a codec, a resolution, and a frame rate setting for the first cut out portion than for the second cut out portion.

Similarly the interface controller is configured to reassign control to the first cut out portion from the remote device to a third remote device.

A controller embodiment includes a transceiver configured to receive an image from a camera over a network; and an input unit configured to produce a control request and send the control request to the camera, the input unit also being configured to generate a designation request that causes the camera to controllably set a cut out portion of the image, wherein the transceiver is configured to receive the cut out portion of the image send from the camera.

The controller may optionally include a display configured to display the cut out portion after another controller releases control of the camera, wherein the input unit generates the designation request after being granted control by the camera. The display being configured to optionally display a third cut out portion controlled by a third controller.

A method of controlling a camera includes capturing an image of an area, receiving a control request and selectively granting control to the remote device for setting a cut out portion of the image, receiving a designation request from the remote device for setting the cut out portion, and controlling the camera to capture the cut out portion of the image.

In the exemplary method, the cut out portion is a first cut out portion, and the controlling includes selectively granting control over the first cut out portion to a remote device, and selectively granting control over a second cut out portion to a second remote device. The controlling optionally includes reassigning control to the first cut out portion from the remote device to a third remote device.

In a method of remotely controlling a camera, the method includes receiving via an interface an image from a camera over a network; producing a control request by a controller based on an external input and sending the control request to the camera; generating a designation request based on external input that when sent to the camera causes the camera to controllably set a cut out portion of the image; and receiving the cut out portion of the image send from the camera.

Optionally, the method further includes displaying the cut out portion on a display after another cut out portion that was controlled by another controller releases control of the camera; and generating the designation request after the camera grants control to the controller.

An exemplary non-transitory computer readable storage device has stored therein instructions that when executed by a computer processor cause the computer processor to perform a method including: capturing an image of an area; receiving a control request and selectively granting control for setting a cut out portion of the image; receiving a designation request for setting the cut out portion; and controlling the camera to capture the cut out portion of the image.

In the method, the cut out portion is a first cut out portion, and the controlling includes selectively granting control over the first cut out portion to a remote device, and selectively granting control over a second cut out portion to a second remote device.

An exemplary non-transitory computer readable storage device has stored therein instructions that when executed by a computer processor cause the computer processor to perform a method including: receiving via an interface an image from a camera over a network; producing a control request by a controller based on an external input and sending the control request to the camera; generating a designation request based on external input that when sent to the camera causes the camera to controllablysets a cut out portion of the image; and receiving the cut out portion of the image send from the camera.

The method further includes displaying the cut out portion on a display after another cut out portion that was controlled by another controller releases control of the camera; and generating the designation request after the camera grants control to the controller.

According to the embodiments described above, control can properly be assigned to a client device in a system in which operations such as panning, tilting, and zooming are digitally performed.

### BRIEF DESCRIPTION OF THE DRAWINGS

FIG. 1 is a schematic diagram showing an overall configuration of an imaging system according to an embodiment;
FIG. 2 is a schematic diagram showing processing performed in the imaging system; and
FIG. 3 is a schematic diagram showing an appearance of a plurality of client terminals connected to a network.

### DETAILED DESCRIPTION OF THE EMBODIMENT

Hereinafter, preferred embodiments will be described in detail with reference to the appended drawings. Note that, in this specification and the appended drawings, structural elements that have substantially the same function and structure are denoted with the same reference numerals, and repeated explanation of these structural elements is omitted.

Note that the description will be made in the following order.
(1) Configuration example of imaging system
(2) Processing in first control mode
(3) Processing in second control mode
(4) Processing about assignment of control

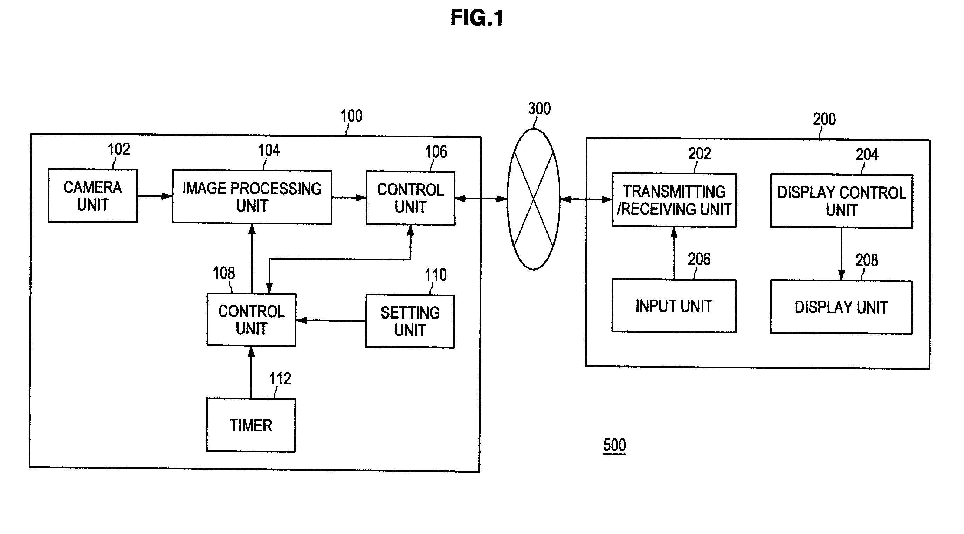

(1) Configuration example of imaging system
   FIG. 1 is a schematic diagram showing an overall configuration of an imaging system 500 according to an embodiment. The imaging system 500 includes a camera terminal device (IP camera) 100 and a client terminal 200 and the camera terminal device 100 and the client terminal 200 are connected via a network 300 such as the Internet.

The camera terminal device 100 is, for example, a monitoring camera that is placed indoors or outdoors and includes a camera unit 102 having a lens optical system that forms an object image and an image sensor that makes a photoelectric conversion of the formed object image. The camera terminal device 100 also includes an image processing unit 104, a transmitting/receiving unit 106, a control unit 108, a setting unit 110, and timer 112.

The client terminal 200 is a device, for example, a personal computer (PC). The client terminal 200 includes a transmitting/receiving unit 202, a display control unit 204, an input unit 206, and a display unit 208. Each functional block of the camera terminal device 100 and the client terminal 200 is configured by hardware (circuit) or a central processor such as a CPU and software (program) to cause the hardware to function. In this case, the program can be recorded in a recording medium such as a memory included in the camera terminal device 100 or the client terminal 200 or an external memory inserted from outside.

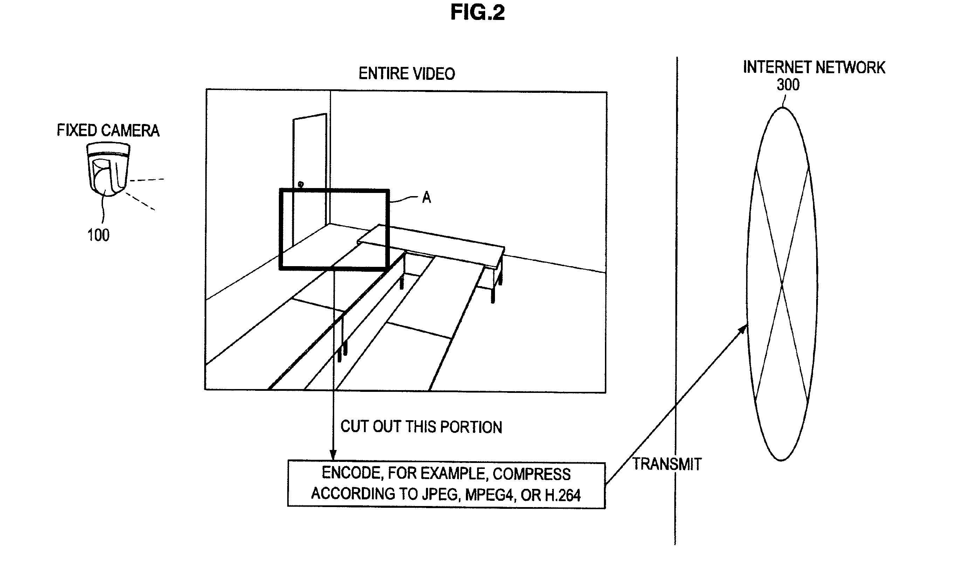

FIG. 2 is a schematic diagram showing processing performed in the imaging system 500. It is assumed here that the camera terminal device 100 is installed in an indoor conference room. As shown in FIG. 2, the camera unit 102 of the camera terminal device 100 images a relatively wide range in the conference room as a whole image.

The whole image is transmitted to the client terminal 200 as data of a still image. The user can specify a desired range from the whole image by using the client terminal 200. If, for example, a region A shown in FIG. 2 is specified by the client terminal 200, the camera terminal device 100 encodes data of a live image of the region A and transmits the encoded data to the client terminal 200.

More specifically, the whole image (not live images) of a still image transmitted from the camera terminal device 100 is displayed in the display unit 208 of the client terminal 200 by processing of the display control unit 204 in advance. If the user specifies the desired region A in the whole image by operating the input unit 206 of the client terminal 200, the transmitting/receiving unit 202 of the client terminal 200 transmits information about the region A to the camera terminal device 100.

When the transmitting/receiving unit 106 of the camera terminal device 100 receives information (control information) about the region A via the network 300, the transmitting/receiving unit 106 transmits the information to the control unit 108. The control unit 108 issues an instruction to the image processing unit 104 to cut out a portion of the region A from a whole image (live image) transmitted from the camera unit 102 and to perform encode processing thereon. The transmitting/receiving unit 106 receives a live image of the region A on which encode processing has been performed from the image processing unit 104 and transmits the live image to the client terminal 200 via the network 300.

When the transmitting/receiving unit 202 of the client terminal 200 receives a live image of the region A from the camera terminal device 100, the transmitting/receiving unit 202 transmits data thereof to the display control unit 204. The display control unit 204 decodes the information about the region A and performs processing to display the information in the display unit 208.

Thus, by specifying a desired region from a whole image by operating the client terminal 200, the user can digitally perform operations equivalent to those of mechanical panning, tilting, or zooming and can acquire, as a result, a video of the desired region.

Particularly in recent years, with an increase in capacity of the network 300, images of higher quality with more pixels can be transmitted, but if all data of whole images should be transmitted as live images, the amount of data thereof will be huge. By transmitting only necessary data by specifying a region on the side of the user like in the present embodiment, images of higher quality of the desired region can be viewed.

In a system like one described above, if a plurality of the client terminals 200 is connected to one unit of the camera terminal device 100, a case when these client terminals 200 specify regions in a whole image simultaneously can be considered.

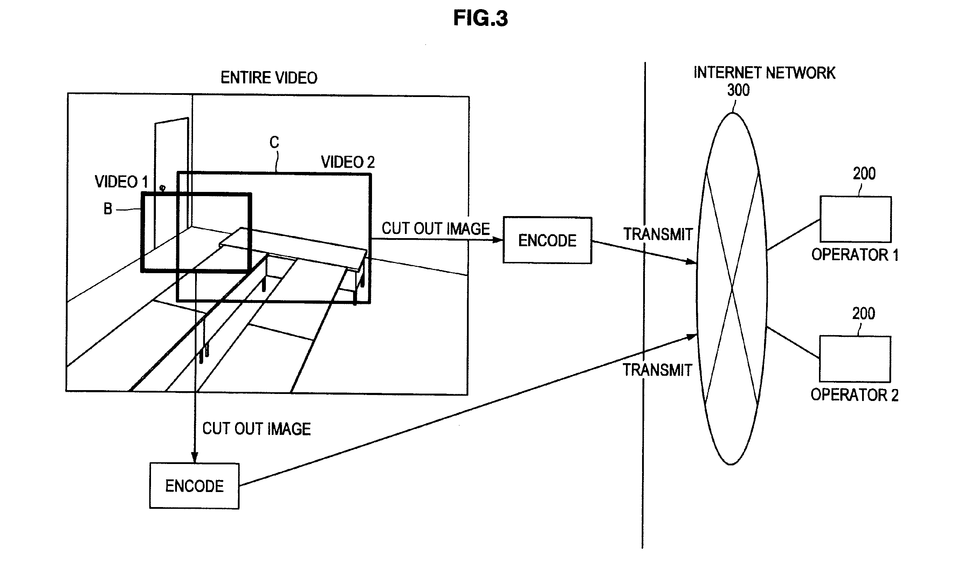

FIG. 3 is a schematic diagram showing an appearance of the plurality of the client terminals 200 connected to the network 300. It is assumed in FIG. 3 that up to two videos are specified as videos that can be operated by the plurality of the client terminals 200. In FIG. 3, the user can acquire live images of desired regions by separately specifying a video 1 (region B) and a video 2 (region C). In such a case, if the plurality of the client terminals 200 attempts to control the video 1 or the video 2 simultaneously, a situation in which the control thereof is competed against will arise.

If, for example, the two client terminals 200 attempt to control the region of the video 1 by simultaneously specifying the video 1, the control over the video 1 will be competed against and thus, it becomes necessary to assign control to one of the client terminals 200.

In such a case, the control to operate the video 1 is assigned to one of the client terminals 200 in the present embodiment and only the client terminals 200 to which the control is assigned can acquire a desired video by controlling the region of the video 1.

In the present embodiment, control is assigned to each of the client terminals 200 by using one of two control modes. Each mode will be described below.

(2) Processing in first control mode
   Processing in first control mode is applied when, for example, settings of codec, resolution, or frame rate are the same between the video 1 and the video 2 and each of the client terminals 200 can receive both the video 1 and the video 2.

In processing in first control mode, as shown in FIG. 3, when two videos of the video 1 and the video 2 can be operated and control over one of the videos is vacant, the vacant control of video is assigned to the client terminal 200 that makes an entry next to operate a video.

If, for example, controls of both the video 1 and the video 2 are vacant, the client terminal 200 (denoted as an operator 1) that first makes an entry can obtain the control over the video 1 or the video 2. It is assumed here that the operator 1 obtains the control over the video 1 to operate the video 1. While the operator 1 holds the control over the video 1, the operator 1 can freely operate the range of the video 1 to acquire a live image of a desired region.

Next, the client terminal 200 (denoted as an operator 2) that makes an entry while the operator 1 holds the control over the video 1 obtains the control over the video 2 because the control over the video 2 is vacant. Thus, while the operator 2 holds the control over the video 2, the operator 2 can freely operate the range of the video 2 to acquire a live image of a desired region.

Next, the client terminal 200 (denoted as an operator 3) that makes an entry while the operator 1 holds the control over the video 1 and the operator 2 holds the control over the video 2 may not obtain control because the controls over the video 1 and the video 2 are held by the operator 1 and the operator 2, respectively. Thus, the operator 3 waits until the control over the video 1 or the video 2 becomes vacant. Further, if an operator 4 makes an entry thereafter, the client terminal 200 will obtain control when the control becomes vacant in order of entry time.

The time in which control is held, for example, can be preset. The timer 112 of the camera terminal device 100 counts the time in which each operator holds control and, when a predetermined time passes, removes the control of the operator. If, as an example, the time in which an operator holds control is 15 min, when 15 min pass after the operator 1 obtains the control over the video 1 in the above example, the control of the operator 1 over the video 1 is removed. Accordingly, the operator 3 on standby obtains the control over the video 1 and can operate the video 1. Further, when 15 min pass after the operator 2 obtains the control over the video 2, the control of the operator 2 over the video 2 is removed. Accordingly, the operator 4 on standby obtains the control over the video 2 and can operate the video 2.

The first control mode described above is suitably used when settings of codec, resolution, or frame rate are the same between the video 1 and the video 2, but is not limited to such a case.

(3) Processing in second control mode
   Next, processing in second control mode will be described. Processing in second control mode is applied when settings of codec, resolution, or frame rate are different between the video 1 and the video 2 and each of the client terminals 200 can receive only one of the video 1 and the video 2.

First, if the control over the video 1 is vacant, the client terminal 200 (denoted as an operator 1) capable of receiving the video 1 obtains the control over the video 1 and can freely operate the range of the video 1.

Next, the other client terminal 200 (denoted as an operator 2) capable of receiving the video 1 may not operate the video 1 while the operator 1 holds the control over the video 1. This client terminal 200 may not receive the video 2. Thus, the operator 2 waits until the control of the operator 1 is removed.

On the other hand, the other client terminal 200 (denoted as an operator 3) capable of receiving the video 2 may not receive the video 1. Thus, even while the operator 1 holds the control over the video 1, if the control over the video 2 is vacant, this client terminal 200 can obtain the control over the video 2 and freely operate the range of the video 2.

The other client terminal 200 (denoted as an operator 4) capable of receiving the video 2 may not operate the video 2 while the operator 3 holds the control over the video 2. This client terminal 200 may not receive the video 1 and thus, the operator 4 waits until the control of the operator 3 is removed.

Like the first control mode, the time in which control is held can be preset. The timer 112 of the camera terminal device 100 counts the time in which each operator holds control and, when a predetermined time passes, removes the control of the operator. When 15 min pass after the operator 1 obtains the control over the video 1 in the above example, the control of the operator 1 over the video 1 is removed. Accordingly, the operator 2 on standby obtains the control over the video 1 and can operate the video 1. Further, when 15 min pass after the operator 3 obtains the control over the video 2, the control of the operator 3 over the video 2 is removed. Accordingly, the operator 4 on standby obtains the control over the video 2 and can operate the video 2.

The second control mode described above is suitably used when settings of codec, resolution, or frame rate are different between the video 1 and the video 2, but is not limited to such a case.

(4) Processing about assignment of control
   In order to obtain control, the user performs an operation to select the video 1 or the video 2 from the client terminal 200. A case when any of the client terminals 200 obtains the control over the video 1 will be described. This operation is performed by specifying an outer frame of the video 1 displayed in the display unit 208 from the input unit 206, for example, a mouse, keyboard or the like, but is not limited to this. After receiving this operation, the transmitting/receiving unit 202 transmits information (control request information) indicating that the client terminal 200 is attempting to obtain the control over the video 1 to the camera terminal device 100. When the client terminal 200 is attempting to obtain the control over the video 1, information (control request information) indicating that an attempt is being made to obtain the control over the video 2 is transmitted to the camera terminal device 100.

After control request information being transmitted to the camera terminal device 100 via the network 300 and received by the transmitting/receiving unit 106, the control request information is transmitted to the control unit 108. If no control is assigned to the video 1 or the video 2 over which the control is requested, the control unit 108 assigns the control to the client terminal 200 that has transmitted control request information and stores the IP address thereof. Accordingly, when information specifying a region of the video 1 is received from the client terminal 200 to which the control has been assigned, the control unit 108 issues an instruction to cut out only the specified portion of a whole image (live image) transmitted from the camera unit 102 and to perform encode processing thereon. The transmitting/receiving unit 106 receives a live image of the region A on which encode processing has been performed from the image processing unit 104 and transmits the live image to the client terminal 200 holding the control via the network 300.

The control unit 108 also performs processing to transmit information (control permission information) indicating that the control is assigned to the client terminal 200 that has transmitted the control request information. Accordingly, the control permission information is transmitted from the transmitting/receiving unit 106. When the control is assigned, the control unit 108 counts the elapsed time after the control being assigned based on time information from the timer 112. The control permission information contains the time (control assignment time) at which the control is assigned and information about the video (video 1) to which the control is assigned.

The control permission information is transmitted to the client terminal 200 via the network 300. When the control permission information is received, the transmitting/receiving unit 202 of the client terminal 200 transmits the control permission information to the display control unit 204. The display control unit 204 can cause the display unit 208 to display the remaining time in which the control can be held based on the control assignment time contained in the control permission information.

If the control over the video 1 over which the control is requested is already assigned, the control unit 108 transmits information indicating that the control is already assigned and the remaining time before the control is removed to the client terminal 200 that has transmitted the control request information. When such information is received through the transmitting/receiving unit 202, the client terminal 200 that has transmitted the control request information displays the information in the display unit 208 through processing of the display control unit 204. Therefore, the user can recognize the waiting time before the control is assigned to the client terminal 200 of the user.

According to the present embodiment, as described above, the control can be assigned to each of the client terminals 200 in a system capable of digitally performing operations such as panning, tilting, and zooming. Therefore, even if operation requests from the client terminals 200 are competed against, control can be permitted to each of the client terminals 200 according to the assigned control.

It should be understood by those skilled in the art that various modifications, combinations, sub-combinations and alterations may occur depending on design requirements and other factors insofar as they are within the scope of the appended claims or the equivalents thereof.
The present application contains subject matter related to that disclosed in Japanese Priority Patent Application JP 2010-108563 filed in the Japan Patent Office on May 10, 2010, the entire content of which is hereby incorporated by reference.

## Claims

1. A camera control unit comprising:
an image processing unit that controllably captures a cut out portion of an image of an area captured by a camera unit; and
an interface controller configured to receive a control request and selectively grant control in response, and receive a designation request to set the cut out portion of said image.

2. The camera control unit of claim 1, wherein
said image processing unit controllably performs camera control including at least one of pan, tilt and zoom.

3. The camera control unit of claim 1 or 2,
wherein said image processing unit controllably performs camera control including at least one of digital pan, digital tilt and digital zoom.

4. The camera control unit of any one of claims 1 to 3,
wherein said interface controller is configured to receive a control request from a remote device and send said image of the cut out portion to said remote device.

5. The camera control unit of any one of claims 1 to 4,
wherein said cut out portion is a first cut out portion, and
said interface controller is configured to selectively grant control over said first cut out portion to a remote device, and selectively grant control over a second cut out portion to a second remote device.

6. The camera control unit of claim 5,
wherein said first cut out portion is a different part of said image than said second cut out portion.

7. The camera control unit of any one of claims 1 to 6, wherein
said control request includes a specification of said cut out portion of said image.

8. The camera control unit of claim 1 to 7,
further comprising a video camera.

9. The camera control unit of claim 5 or 6,
wherein said image processor applies at least one of common codec, resolution, and frame rate settings for the first cut out portion and the second cut out portion.

10. The camera control unit of claim 5 or 6,
wherein said image processor applies a different one of at least a codec, a resolution, and a frame rate setting for the first cut out portion than for the second cut out portion.

11. The camera control unit of claim 5 or 6,
wherein said interface controller is configured to reassign control to the first cut out portion from the remote device to a third remote device.

12. A controller comprising:
a transceiver configured to receive an image from a camera over a network; and
an input unit configured to produce a control request and send said control request to said camera, said input unit also being configured to generate a designation request that causes the camera to controllably set a cut out portion of said image,
wherein said transceiver is configured to receive said cut out portion of said image send from said camera.

13. A method of controlling a camera, comprising:
capturing an image of an area;
receiving a control request and selectively granting control for setting a cut out portion of said image;
receiving a designation request for setting the cut out portion; and
controlling said camera to capture said cut out portion of said image.

14. A method of remotely controlling a camera, comprising:
receiving via an interface an image from a camera over a network;
producing a control request by a controller based on an external input and sending said control request to said camera;
generating a designation request based on external input that when sent to said camera causes the camera to controllably set a cut out portion of said image; and
receiving said cut out portion of said image send from said camera.

15. A non-transitory computer readable storage device having stored therein instructions that when executed by a computer processor cause the computer processor to perform a method comprising:
capturing an image of an area;
receiving a control request and selectively granting control for setting a cut out portion of said image;
receiving a designation request for setting the cut out portion; and
controlling said camera to capture said cut out portion of said image.

16. A non-transitory computer readable storage device having stored therein instructions that when executed by a computer processor cause the computer processor to perform a method comprising:
receiving via an interface an image from a camera over a network;
producing a control request by a controller based on an external input and sending said control request to said camera;
generating a designation request based on external input that when sent to said camera causes the camera to controllably set a cut out portion of said image; and
receiving said cut out portion of said image send from said camera.
